(19) 

Europäisches
Patentamt
European
Patent Office
Office européen
des brevets

(11) **EP 2 406 978 B1**

(12) **EUROPEAN PATENT SPECIFICATION**

(45) Date of publication and mention
of the grant of the patent:
**28.11.2012 Bulletin 2012/48**

(21) Application number: **09848617.8**

(22) Date of filing: **26.08.2009**

(51) Int Cl.:
$H04L\ 27/26$ (2006.01)     $H04J\ 13/00$ (2011.01)

(86) International application number:
**PCT/CN2009/073537**

(87) International publication number:
**WO 2011/022885 (03.03.2011 Gazette 2011/09)**

(54) **Method for generating DFT coefficients**

Verfahren zum Erzeugen von DFT-Koeffizienten

Procédé pour générer des coefficients DFT

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**18.01.2012 Bulletin 2012/03**

(73) Proprietor: **Huawei Technologies Co., Ltd.
Shenzhen, Guangdong 518129 (CN)**

(72) Inventor: **POPOVIC, Branislav
c/o Huawei Technologies Co.Ltd., Int.Prop.Dept.
Shenzhen (CN)**

(74) Representative: **Kreuz, Georg Maria et al
Huawei Technologies
Dessauerstrasse 3
80992 Munich (DE)**

(56) References cited:
**WO-A2-2008/052032     CN-A- 101 170 346
CN-A- 101 455 048**

• **POPOVIC B M: "Efficient DFT of Zadoff-Chu
sequences", THE INSTITUTION OF
ENGINEERING AND TECHNOLOGY. JOURNAL,,
vol. 46, no. 7, 1 April 2010 (2010-04-01), pages
502-503, XP006035415, ISSN: 1350-911X, DOI:
10.1049/EL:20103510**
• **BEYME S ET AL: "Efficient computation of DFT
of Zadoff-Chu sequences", THE INSTITUTION OF
ENGINEERING AND TECHNOLOGY. JOURNAL,,
vol. 45, no. 9, 23 April 2009 (2009-04-23) , pages
461-463, XP006032970, ISSN: 1350-911X, DOI:
10.1049/EL:20093330**
• **MANSOUR M M: "Optimized Architecture for
Computing Zadoff-Chu Sequences with
Application to LTE", GLOBAL
TELECOMMUNICATIONS CONFERENCE, 2009.
GLOBECOM 2009. IEEE, IEEE, PISCATAWAY, NJ,
USA, 30 November 2009 (2009-11-30), pages 1-6,
XP031646410, ISBN: 978-1-4244-4148-8**

EP 2 406 978 B1

**Description**

Technical Field

The present invention relates to a method for generating DFT coefficients, or more particularly to a method according to the preamble of claim 1. Furthermore, the invention also relates to a device and a computer program thereof.

Background of the Invention

In Long Term Evolution (LTE) cellular system standard Random Access (RA) preambles are used for uplink synchronisation, i.e. the RA preambles are used by User Equipments (UEs) for synchronisation with base stations. RA preambles are generated from cyclically shifted Zadoff-Chu (ZC) sequences of prime length $N$, by using so-called DFT-S-OFDM modulation, which is well known in the art.

The first step in generating such a RA preamble is to perform an N-point Discrete Fourier Transform (DFT) of a cyclically shifted ZC sequence characterized by root index $u$ and cyclic shift $p$. The Fourier spectrum of the ZC sequence is then mapped into the central part of a band allocated for RA transmission by multiplying the DFT coefficients with the elements of a discrete complex exponential function. The RA preamble waveform is obtained by adding the cyclic prefix to the waveform resulting from the $N$-point Inverse DFT of the weighted DFT coefficients of the ZC sequence.

A closed-form formula for the DFT of a ZC sequence of prime length $N$ has been derived as

$$X_u(n) = W^{-\frac{n(n+u)}{2u}} X_u(0) \qquad (1),$$

where

$$X_u(0) = \sum_{k=0}^{N-1} x_u(k) \qquad (2),$$

and $\{x_u(k)\}$ is a ZC sequence.

A ZC sequence is defined as

$$x_u(k) = W_N^{uk(k+N \bmod 2)/2}, \quad k=0,1,\dots,N\text{-}1, \; W_N = e^{-j2\pi/N}, \; j=\sqrt{-1},$$

$$N \text{ is any positive integer, } (u,N)=1 \qquad (3),$$

where $u<N$ is an integer relatively prime to $N$. The DFT of the ZC sequence $\{x_u(k)\}$ is defined as

$$X_u(n) = \sum_{k=0}^{N-1} x_u(k) W_N^{nk} \qquad (4).$$

Equation (1) may be used to derive the efficient bank of matched filters for the pair of RA preambles $\{x_{u,p}(k)\}$ and $\{x_{N-u,p}(k)\}$, used in a base station receiver, where

$$x_{u,p}(k) = x_u((k+p) \bmod N) \qquad (5)$$

is a cyclically shifted (by $p$) version of $\{x_u(k)\}$.

Further, the formula (1) may be put into another form as

$$X_u(n) = x_u^*(u^{-1}n)\,X_u(0),\; n=0,1,\ldots,N\text{-}1,\; N \text{ is a prime} \qquad (6),$$

where "*" denotes complex conjugation, and $u^{-1}=1/u$ is the modular multiplicative inverse of $u$, i.e. an integer such that $u \cdot u^{-1}=1$ mod $N$. According to equation (6), the DFT coefficients of a ZC sequence can be obtained directly from the ZC sequence itself, which reduces the number of operations for obtaining the DFT coefficients if the ZC sequence is already generated.

However, equation (6) cannot always be used to reduce the number of operations in a transmitter of a LTE UE, as a transmitted RA preamble can be a cyclically shifted version of a ZC sequence.

BEYME S et al disclosed an efficient computation of DFT of ZC root in his article "efficient computation of DFT of Zadoff-Chu sequences" in THE INSTITUTION OF ENGINEERING AND TECHNOLOGY JOURNAL, vol. 45, no. 9, 23 April 2009. Beyme did not disclose cyclic shift on complex conjugated basic ZC sequences.

## Summary of the Invention

An object of the present invention is to provide a method, and a device and a computer program thereof, for generating DFT coefficients of a cyclically shifted ZC sequence. Another object of the present invention is to provide a solution which reduces the number of operations for generating the DFT coefficients of the cyclically shifted ZC sequence.

Yet another object of the present invention is to provide a solution for obtaining the DFT coefficients for a broader class of ZC sequences.

According to one aspect of the present invention the aforementioned objects are achieved by a method for using DFT coefficients of a cyclically shifted ZC sequence, wherein said cyclically shifted ZC sequence is a basic ZC sequence with root u of length N cyclically shifted by $p>1$ sequence elements. Said method comprising the steps of:

-   receiving a signal carrying information representing said basic Zadoff-Chu (ZC); complex conjugating said basic ZC sequence;

cyclically shifting said complex conjugated basic ZC sequence;
cyclically sampling said cyclically shifted complex conjugated basic ZC sequence; and multiplying said cyclically sampled cyclically shifted complex conjugated basic ZC sequence with a constant C so as to generate the DFT coefficients of said cyclically shifted ZC sequence;
and
using the generated Discrete Fourier Transform (DFT) coefficients in an electronic communication process.

Various embodiments of the method above are disclosed in the dependent claims 2-11.

According to another aspect of the present invention the aforementioned objects are achieved with a computer program characterised in code means, which when run in a computer causes said computer to execute the method according to any of claims 1-11.

According to yet another aspect of the present invention the aforementioned objects are achieved with a device for generating DFT coefficients of a cyclically shifted ZC sequence, wherein said cyclically shifted ZC sequence is a basic ZC sequence with root $u$ of length $N$ cyclically shifted by $p>1$ sequence elements. Said device being arranged to: complex conjugating said basic ZC sequence; cyclically shifting said complex conjugated basic ZC sequence: cyclically sampling said cyclically shifted complex conjugated basic ZC sequence; and multiplying said cyclically sampled cyclically shifted complex conjugated basic ZC sequence with a constant $C$ so as to generate the DFT coefficients of said cyclically shifted ZC sequence.

The device may further be configured in accordance with the different embodiments of the method according to the dependent claims 2-11.

An advantage with the present invention is that the number of computational operations for obtaining the DFT of a cyclically shifted ZC sequence can be reduced, which e.g. means that battery consumption in UEs can be reduced when generating RA preambles for uplink synchronisation. Another advantage with the present invention is that the solution is applicable to a broader class of problems, since the solution is generalised to any positive integer for length $N$ of the ZC sequences.

Other advantages and applications of the present invention will be apparent from the following detailed description of the invention.

## Brief Description of the Drawings

The appended drawing is intended to clarify and explain the present invention, in which:

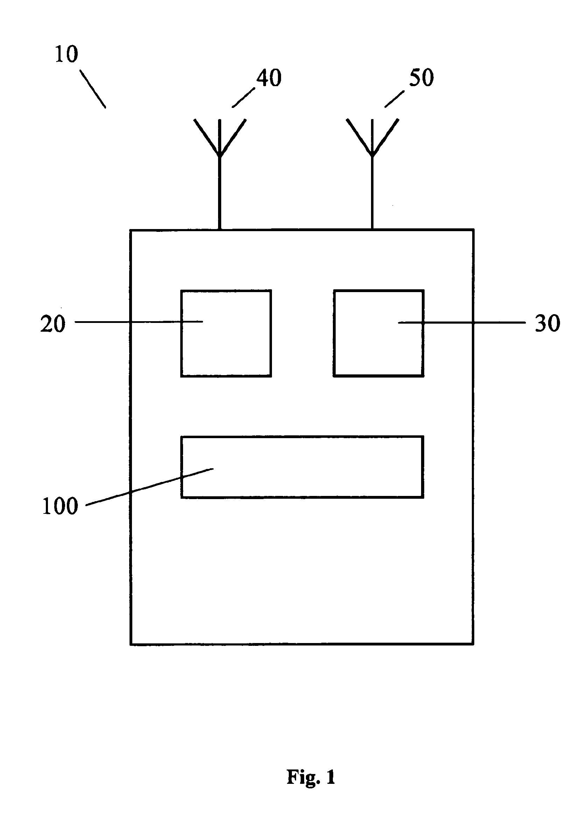

Figure 1 schematically shows a UE comprising at least one device for generating DFT coefficients according to the present invention.

## Detailed Description of Embodiments of the Invention

From the above description it is clear that equation (6) cannot always be used to reduce the number of operations in a transmitter of a LTE UE. The reason is that a transmitted RA preamble can be a cyclically shifted version of a ZC sequence, which not can be solved with equation (6).

According to the present invention, for a given root $u$ and cyclic shift $p$ of a basic ZC sequence of any integer length $N$, the corresponding DFT is delayed by $p$ and then cyclically sampled by integer increment complex-conjugated version of the already generated basic Zadoff-Chu sequence, multiplied by a constant $C$.

Therefore, the DFT coefficients can be calculated by $N$-1 number of complex additions and $N$+1 number of complex multiplications using only the elements of the already generated basic ZC sequence. A basic ZC sequence is henceforth defined as being a ZC sequence defined by equation (3) above. cyclically sampled by integer increment complex-conjugated version of the already generated basic Zadoff-Chu sequence, multiplied by a constant $C$.

Therefore, the DFT coefficients can be calculated by $N$-1 number of complex additions and $N$+1 number of complex multiplications using only the elements of the already generated basic ZC sequence. A basic ZC sequence is henceforth defined as being a ZC sequence defined by equation (3) above.

According to an embodiment of the invention, the basic ZC sequence is cyclically sampled by integer increment $u^{-1}$, where $u \cdot u^{-1} = 1$ modulo $N$.

According to another embodiment of the invention, the constant $C$ consists of two factors: the $p$+1:th element of the ZC sequence $f1$, and the sum of all the elements of the ZC sequence $f2$. The second factor $f2$ may also be expressed in closed form, which is described below.

According to yet another embodiment of the invention, the length of the ZC sequence $N$ is a prime number, and the ZC sequence is used for generating a RA preamble in a mobile station terminal for uplink synchronisation in a wireless communication system. The mobile station terminal is in one embodiment a UE, and the wireless communication system is a LTE communication system or a LTE Advanced communication system.

Mathematically, the present invention solves the aforementioned problems by providing an expression for

$$X_{u,p}(n) = \sum_{k=0}^{N-1} x_u(k+p)W_N^{nk} , \quad n=0,1,\ldots,N\text{-}1, (u,N)=1, N \text{ is any positive integer} \quad (7).$$

It should be noted that the length $N$ of the ZC sequences in equation (7) is now generalized to be any positive integer, which makes the present solution applicable to the broader class of problems.

We start by expressing $x_u(k+p)W_N^{nk}$ as

$$x_u(k+p)W_N^{nk} = W_N^{-udp}\ W_N^{u[(k+p)(k+p+N \bmod 2)+2d(k+p)]/2}$$

$$= W_N^{-udp}\ W_N^{ul(l+N \bmod 2+2d)/2} , \ l=k+p, d=u^{-1}n \bmod N \quad (8).$$

Note that the modular multiplicative inverse $u^{-1}$ mod $N$ exists for any integers $u$ and $N$ such that $(u,N)$ = 1. The procedure from the Appendix of "Efficient matched filters for paired root Zadoff-Chu sequences", by B. M. Popovic and O. Mauritz (3GPP RANI#48bis meeting, source: Huawei, tdoc number R1-071409, St. Julian's, Malta, March 26-30, 2007), can be directly applied to equation (8) as follows

$$x_u(k+p)W^{nk} = W_N^{-udp}\, W_N^{ul(l+N\bmod 2+2d)/2}\, \frac{W_N^{ud(d+N\bmod 2)/2}}{W_N^{ud(d+N\bmod 2)/2}}$$

$$= W_N^{-ud(d+N\bmod 2+2p)/2}\, x_u(l+d) \tag{9}.$$

If we then insert equation (9) into equation (7), we obtain

$$X_{u,p}(n) = W_N^{-ud(d+N\bmod 2+2p)/2} \sum_{k=0}^{N-1} x_u(k+p+d) \tag{10}.$$

As $p+d$ is a constant, the sum in equation (10) is equal to equation (2). The term outside the sum in equation (10) can be decomposed using the same procedure as to obtain equation (9), so we finally have

$$X_{u,p}(n) = x_u^*(u^{-1}n+p)\, x_u(p) X_u(0) \tag{11}.$$

From the equation (11) it follows that for given root $u$ and the cyclic shift $p$ of a basic ZC sequence of any length $N$, the corresponding DFT is cyclically delayed by $p$ and then cyclically sampled by integer increment $u^{-1}$ complex-conjugated version of already generated basic ZC sequence, multiplied by a constant $C$, consisting of two factors $f1$ and $f2$, where $f1$ is the $p+1$:th element of the basic ZC sequence, and $f2 = X_u(0)$ is the sum of all the elements of the basic ZC sequence.

Therefore, the DFT of a basic ZC sequence can be calculated by $N$-1 complex additions and $N$+1 complex multiplications, by only using the elements of the already generated basic ZC sequence expressed in equation (3).

The constant $X_u(0)$ can be expressed in the closed-form. For $N$ odd, $X_u(0)$ is by the definition in equation (2) equal to

$$X_u(0) = \sum_{k=0}^{N-1} W_N^{uk(k+1)/2} \tag{12}.$$

As $k(k+1)/2$ is an integer for any integer $k$, it follows that

$$W_N^{u(N/2)k(k+1)} = e^{-j2\pi uk(k+1)/2} = 1 \tag{13}.$$

Thus, by using equation (13), we can re-write equation (12) as

$$X_u(0) = \sum_{k=0}^{N-1} W_N^{u\alpha k(k+1)} \tag{14},$$

where $\alpha=(N+1)/2$ is an integer, as $N$ is odd. By introducing an additional integer $\beta=(N-1)/2$, we can re-write equation (14) as

$$X_u(0) = \sum_{k=0}^{N-1} W_N^{u\alpha\left[(k-\beta)^2-\beta^2\right]}, \quad \alpha = \frac{N+1}{2}, \quad \beta = \frac{N-1}{2} \tag{15}.$$

It further follows that

$$X_u(0) = W_N^{-u\alpha\beta^2} \sum_{k=0}^{N-1} W_N^{u\alpha k^2} = W_N^{u\alpha\beta/2} W_N^{-u(N/2)\alpha\beta} G(u\alpha, N)^* \qquad (16),$$

where $G(m,L)^*$ *is* complex-conjugate of the quadratic Gauss sum $G(m,L)$, equal to

$$G(m,L)= \sum_{k=0}^{L-1} W_L^{mk^2} = \begin{cases} \left(\dfrac{m}{L}\right)\sqrt{L}, & L = 1 \bmod 4 \\ \left(\dfrac{m}{L}\right)j\sqrt{L}, & L = 3 \bmod 4 \\ \left(\dfrac{L}{m}\right)(1+j^m)\sqrt{L}, & L = 0 \bmod 4 \\ 0, & L = 2 \bmod 4 \end{cases} \qquad (17).$$

In equation (17), $\left(\dfrac{m}{L}\right)$ denotes Jacobi symbol. A Jacobi symbol $\left(\dfrac{a}{b}\right)$ is defined for any integer $a$ and any odd integer $b$ as

$$\left(\frac{a}{b}\right)=\left(\frac{a}{p_1}\right)^{e_1}\left(\frac{a}{p_2}\right)^{e_2}\cdots\left(\frac{a}{p_k}\right)^{e_k} \qquad (18),$$

where $p_1$, $p_2$, ...$p_k$ are primes, $e_1$, $e_2$, ...$e_k$ are positive integers, such that $b= p_1^{e_1} p_2^{e_2} ...p_k^{e_k}$ , , and $\left(\dfrac{a}{p_l}\right)$ is Legendre symbol defined for any integer $a$ and any prime $p_l$, as

$$\left(\frac{a}{p_l}\right)= \begin{cases} 0, & \text{if } m = 0 \bmod p_l \\ +1, & \text{if } m \neq 0 \bmod p_l \text{ and there is an integer } x, \text{ such that } x^2 = m \bmod p_l \\ -1, & \text{if there is no such } x \end{cases} \qquad (19).$$

The term $W_N^{u\alpha\beta/2}$ at the right-hand side of equation (16) is equal to $x_u(\beta)$, while the term $W_N^{-u(N/2)\alpha\beta} = 1$ according to equation (13). Hence, we finally obtain

$$X_u(0)=\left(\frac{u\alpha}{N}\right)\frac{1+j^N}{1+j} \sqrt{N}x_u(\beta) , \text{ when } N \text{ is odd} \qquad (20).$$

For $N$ even, $X_u(0)$ is given by

$$X_u(0)= \left(\frac{2N}{u}\right)(1-j^u)\sqrt{N/2} , N \text{ is even} \qquad (21).$$

The proof for equation (21) is straightforward: since a ZC sequence is periodic with period $N$, we can write

$$X_u(0) = \sum_{k=0}^{N-1} W_N^{uk^2/2}$$

$$= \frac{1}{2} \sum_{k=0}^{2N-1} W_{2N}^{uk^2}$$

$$= \frac{1}{2} G(u, 2N)^* \qquad\qquad (22).$$

The expression for $G(u,2N)^*$ is given by equation (17), for $L=0 \bmod 4$ ($2N=0 \bmod 4$ for any $N$ even), so the final result directly follows from equation (22).

With closed form expressions for $X_u(0)$ according to equations (20) and (21), respectively, the number of operations for obtaining the DFT coefficients for ZC sequences reduces to $N+1$ number of complex multiplications compared to the general solution above, which requires $N-1$ number of complex additions and $N+1$ number of complex multiplications.

The present invention also relates to a device 100 for generating DFT coefficients of a cyclically shifted ZC sequence. Figure 2 schematically shows a mobile station terminal 10, such as a UE, comprising a device 100 according to the invention. The UE may also further comprise at least a transmitting 20 and at least a receiving circuitry 30 connected to one or more antennas 40, 50. The transmitting 20 and receiving 30 circuitries each comprises electronics for transmission and reception of communication signals, respectively. The DFT coefficients generated by the device 100 are preferable used when generating RA preambles for uplink synchronisation with base stations, such as eNodeB.

Furthermore, as understood by the person skilled in the art, the method for generating DFT coefficients of a cyclically shifted ZC sequence according to the invention may be implemented in a computer program, having code means, which when run in a computer causes the computer to execute the steps of the method. The computer program is included in a computer readable medium of a computer program product. The computer readable medium may consist of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Finally, it should also be understood that the present invention is not limited to the embodiments described above, but also relates to and incorporates all embodiments within the scope of the appended independent claims.

## Claims

1. Method for using Discrete Fourier Transform coefficients of a cyclically shifted Zadoff-Chu sequence, wherein said cyclically shifted Zadoff-Chu sequence is a basic Zadoff-Chu sequence with root $u$ of length $N$ cyclically shifted by $p>1$ sequence elements, said method comprising the steps of:

   - receiving a signal carrying information representing said basic Zadoff-Chu <u>sequence</u>;
   - complex conjugating said basic Zadoff-Chu sequence;
   - cyclically shifting said complex conjugated basic Zadoff-Chu sequence;
   - cyclically sampling said cyclically shifted complex conjugated basic Zadoff-Chu sequence;
   - multiplying said cyclically sampled cyclically shifted complex conjugated basic Zadoff-Chu sequence with a constant C so as to generate the Discrete Fourier Transform coefficients of said cyclically shifted Zadoff-Chu sequence; and
   - using the generated Discrete Fourier Transform coefficients in an electronic communication process.

2. Method according to claim 1, wherein the Discrete Fourier Transform coefficients of said cyclically shifted Zadoff-Chu sequence are defined as:

$$X_{u,p}(n) = \sum_{k=0}^{N-1} x_u(k+p) W_N^{nk} , \quad n=0,1,\ldots,N\text{-}1, (u,N)=1.$$

3. Method according to claim 1, wherein said basic Zadoff-Chu sequence is defined as:

$$x_u(k) = W_N^{uk(k+N \bmod 2)/2},$$

where k=0, 1, ..., $N$-1; $W_N=e^{-j2\pi/N}$, $j=\sqrt{-1}$, $N$ is any positive integer, and $u<N$ is an integer relatively prime to $N$.

**4.** Method according to claim 1, wherein said basic Zadoff-Chu sequence is cyclically shifted by a shift $p$ modulo $N$.

**5.** Method according to claim 1, wherein said basic Zadoff-Chu sequence is cyclically sampled by $u^{-1}$, where $u \cdot u^{-1} = 1$ modulo $N$.

**6.** Method according to claim 1, wherein said constant $C$ is a product of a first $f1$ and a second $f2$ factor.

**7.** Method according to claim 6, wherein said first factor $f1$ is the $p$+1:th element of said basic Zadoff-Chu sequence, and said second factor $f2$ is the sum of all elements of said basic Zadoff-Chu sequence.

**8.** Method according to claim 6, wherein:

$$f2 = \left(\frac{u\alpha}{N}\right)\frac{1+j^N}{1+j}\sqrt{N}x_u(\beta),$$

when N is odd, and

$$f2 = \left(\frac{2N}{u}\right)(1-j^u)\sqrt{N/2},$$

when N is even.

**9.** Method according to claim 1, wherein $N$ is a prime number.

**10.** Method according to claim 9, wherein said basic Zadoff-Chu sequence is used for generating a Random Access preambles in a mobile station terminal for uplink synchronisation in a wireless communication system.

**11.** Method according to claim 10, wherein said mobile station terminal is a User Equipment (10) and said wireless communication system is a Long Term Evolution communication system or a Long Term Evolution Advanced communication system.

**12.** Computer program, comprising code means, which when run in a computer causes said computer to execute said method according to any of claims 1-11.

**13.** Computer program product comprising a computer readable medium and a computer program according to claim 12, wherein said computer program is included in the computer readable medium, and consist of one or more from the group: ROM, PROM, EPROM, Flash memory, EEPROM and hard disk drive.

**14.** Device (100) for generating Discrete Fourier Transform coefficients of a cyclically shifted Zadoff-Chu sequence, wherein said cyclically shifted Zadoff-Chu sequence is a basic Zadoff-Chu sequence with root $u$ of length $N$ cyclically shifted by $p$>1 sequence elements, said device being arranged to:

- complex conjugating said basic Zadoff-Chu sequence;
- cyclically shifting said complex conjugated basic Zadoff-Chu sequence;
- cyclically sampling said cyclically shifted complex conjugated basic Zadoff-Chu sequence; and
- multiplying said cyclically sampled cyclically shifted complex conjugated basic Zadoff-Chu sequence with a constant C so as to generate the Discrete Fourier Transform coefficients of said cyclically shifted Zadoff-Chu sequence.

**15.** Mobile station terminal (10), arranged for communication in a wireless communication system, comprising at least one device (100) according to claim 14.

**Patentansprüche**

**1.** Verfahren zum Verwenden von Koeffizienten einer diskreten Fourier-Transformation einer zyklisch verschobenen Zadoff-Chu-Sequenz, wobei die zyklisch verschobene Zadoff-Chu-Sequenz (ZC-Sequenz) eine Zadoff-Chu-Basissequenz mit der Wurzel *u* mit der Länge *N*, die um *p* > 1 Sequenzelemente zyklisch verschoben ist, ist, wobei das Verfahren die folgenden Schritte umfasst:

- Empfangen eines Signals, das Informationen führt, die die Zadoff-Chu-Basissequenz repräsentieren;
- Komplexkonjugieren der Zadoff-Chu-Basissequenz;
- zyklisches Verschieben der komplex konjugierten Zadoff-Chu-Basissequenz;
- zyklisches Abtasten der zyklisch verschobenen komplex konjugierten Zadoff-Chu-Basissequenz;
- Multiplizieren der zyklisch abgetasteten zyklisch verschobenen komplex konjugierten Zadoff-Chu-Basissequenz mit einer Konstante *C*, um Koeffizienten einer diskreten Fourier-Transformation der zyklisch verschobenen Zadoff-Chu-Sequenz zu erzeugen; und
- Verwenden der erzeugten Koeffizienten einer diskreten Fourier-Transformation in einem elektronischen Kommunikationsprozess.

**2.** Verfahren nach Anspruch 1, wobei die Koeffizienten einer diskreten Fourier-Transformation der zyklisch verschobenen Zadoff-Chu-Sequenz definiert sind als:

$$X_{u,p}(n) = \sum_{k=0}^{N-1} x_u(k+p)W_N^{nk} , \quad n=0,1,\dots,N\text{-}1, (u,N)=1 .$$

**3.** Verfahren nach Anspruch 1, wobei die Zadoff-Chu-Basissequenz definiert ist als:

$$x_u(k) = W_N^{uk(k+N \bmod 2)/2} ;$$

wobei $k=0,1,\dots,N\text{-}1$, $W_N = e^{-j2\pi/N}$, $j=\sqrt{-1}$, *N* eine beliebige positive ganze Zahl ist und *u* < *N* eine ganze Zahl ist, die teilerfremd zu *N* ist.

**4.** Verfahren nach Anspruch 1, wobei die Zadoff-Chu-Basissequenz um eine Verschiebung *p* modulo *N* zyklisch verschoben ist.

**5.** Verfahren nach Anspruch 1, wobei die Zadoff-Chu-Basissequenz durch $u^{-1}$ zyklisch abgetastet wird, wobei $u \cdot u^{-1} = 1$ modulo *N* ist.

**6.** Verfahren nach Anspruch 1, wobei die Konstante *C* ein Produkt eines ersten Faktors *f1* und eines zweiten Faktors *f2* ist.

**7.** Verfahren nach Anspruch 6, wobei der erste Faktor *f1* das *p*+1-te Element der Zadoff-Chu-Basissequenz ist und der zweite Faktor *f2* die Summe aller Elemente der Zadoff-Chu-Basissequenz ist.

**8.** Verfahren nach Anspruch 6, wobei:

$$f2 = \left(\frac{u\alpha}{N}\right)\frac{1+j^N}{1+j}\sqrt{N}x_u(\beta) \text{ ist,}$$

wenn N ungerade ist, und

$$f2 = \left(\frac{2N}{u}\right)(1 - j^{u})\sqrt{N/2} \text{ ist,}$$

wenn N gerade ist.

9. Verfahren nach Anspruch 1, wobei $N$ eine Primzahl ist.

10. Verfahren nach Anspruch 9, wobei die Zadoff-Chu-Basissequenz zum Erzeugen von Präambeln mit wahlfreiem Zugriff in einem Mobilstationsendgerät für die Aufwärtsstreckensynchronisation in einem drahtlosen Kommunikationssystem verwendet wird.

11. Verfahren nach Anspruch 10, wobei das Mobilstationsendgerät ein Teilnehmergerät (10) ist und das drahtlose Kommunikationssystem ein Long-Term-Evolution-Kommunikationssystem oder ein Long-Term-Evolution-Advanced-Kommunikationssystem ist.

12. Computerprogramm, das Codemittel umfasst, die, wenn sie in einem Computer ausgeführt werden, veranlassen, dass der Computer das Verfahren nach einem der Ansprüche 1-11 ausführt.

13. Computerprogrammprodukt, das ein computerlesbares Medium und ein Computerprogramm nach Anspruch 12 umfasst, wobei das Computerprogramm in dem computerlesbaren Medium enthalten ist und aus einem oder mehreren aus der folgenden Gruppe besteht: ROM, PROM, EPROM, Flash-Speicher, EEPROM und Festplattenlaufwerk.

14. Vorrichtung (100) zum Erzeugen von Koeffizienten einer diskreten Fourier-Transformation einer zyklisch verschobenen Zadoff-Chu-Sequenz, wobei die zyklisch verschobene Zadoff-Chu-Sequenz eine Zadoff-Chu-Basissequenz mit der Wurzel $u$ mit der Länge $N$, die um $p > 1$ Sequenzelemente zyklisch verschoben ist, ist, wobei die Vorrichtung zu Folgendem ausgelegt ist:

   - Komplexkonjugieren der ZadoffChu-Basissequenz;
   - zyklisches Verschieben der komplex konjugierten Zadoff-Chu-Basissequenz;
   - zyklisches Abtasten der zyklisch verschobenen komplex konjugierten Zadoff-Chu-Basissequenz; und
   - Multiplizieren der zyklisch abgetasteten zyklisch verschobenen komplex konjugierten Zadoff-Chu-Basissequenz mit einer Konstante $C$, um die Koeffizienten der diskreten Fourier-Transformation der zyklisch verschobenen Zadoff-Chu-Sequenz zu erzeugen.

15. Mobilstationsendgerät (10), das für Kommunikation in einem drahtlosen Kommunikationssystem ausgelegt ist, wobei das Mobilstationsendgerät wenigstens eine Vorrichtung (100) nach Anspruch 14 umfasst.

## Revendications

1. Procédé d'utilisation de coefficients de transformée de Fourier discrète appartenant à une séquence de Zadoff-Chu décalée cycliquement dans lequel ladite séquence de Zadoff-Chu (ZC) décalée cycliquement est une séquence de Zadoff-Chu de base présentant une racine $u$ de longueur $N$ décalée cycliquement de $p > 1$ éléments de séquence, ledit procédé comprenant les étapes suivantes :

   - la réception d'un signal transportant des informations représentant ladite séquence de Zadoff-Chu de base,
   - la conjugaison complexe de ladite séquence de Zadoff-Chu de base,
   - le décalage cyclique de ladite séquence de Zadoff-Chu de base complexe conjuguée,
   - l'échantillonnage cyclique de ladite séquence de Zadoff-Chu de base complexe conjuguée décalée cycliquement,
   - la multiplication de ladite séquence de Zadoff-Chu de base complexe conjuguée décalée cycliquement échantillonnée cycliquement avec une constante $C$ de façon à générer les coefficients de transformée de Fourier discrète de ladite séquence de Zadoff-Chu décalée cycliquement, et
   - l'utilisation des coefficients générés de la transformée de Fourier discrète dans un traitement de communication électronique.

2. Procédé selon la revendication 1, dans lequel les coefficients de la transformée de Fourier discrète de ladite séquence de Zadoff-Chu décalée cycliquement sont définis comme étant :

$$X_{u,p}(n) = \sum_{k=0}^{N-1} x_u(k+p)W_N^{nk}, n = 0,1,..., N-1, (u,N) = 1.$$

3. Procédé selon la revendication 1, dans lequel ladite séquence de Zadoff-Chu de base est définie comme étant :

$$x_u(k) = W_N^{uk(k+N \bmod 2)/2},$$

où $k = 0, 1,..., N-1$, $W_N = e^{-j2\pi/N}$, $j = \sqrt{-1}$, $N$ est tout nombre entier positif et $u < N$ est un nombre entier premier relativement par rapport à $N$.

4. Procédé selon la revendication 1, dans lequel ladite séquence de Zadoff-Chu de base est décalée cycliquement d'un pas $p$ modulo $N$.

5. Procédé selon la revendication 1, dans lequel ladite séquence de Zadoff-Chu de base est échantillonnée cycliquement par $u^{-1}$, où $u \cdot u^{-1} = 1$ modulo $N$.

6. Procédé selon la revendication 1, dans lequel ladite constante $C$ est le produit d'un premier facteur $f1$ et d'un second facteur $f2$.

7. Procédé selon la revendication 6, dans lequel ledit premier facteur $f1$ est le $(p + 1)$e élément de ladite séquence de Zadoff-Chu de base, et ledit second facteur $f2$ est la somme de tous les éléments de ladite séquence de Zadoff-Chu de base.

8. Procédé selon la revendication 6, dans lequel :

$$f2 = \left(\frac{u\alpha}{N}\right)\frac{1+j^N}{1+j}\sqrt{N}x_u(\beta)$$

lorsque N est impair, et

$$f2 = \left(\frac{2N}{u}\right)(1-j^u)\sqrt{N/2}$$

lorsque N est pair.

9. Procédé selon la revendication 1, dans lequel $N$ est un nombre premier.

10. Procédé selon la revendication 9, dans lequel ladite séquence de Zadoff-Chu de base est utilisée pour générer un préambule d'accès aléatoire dans une station mobile pour une synchronisation de liaison montante dans un système de communication sans fil.

11. Procédé selon la revendication 10, dans lequel ladite station mobile est un équipement utilisateur (10) et ledit système de communication sans fil est un système de communication d'évolution à long terme ou un système amélioré de communication d'évolution à long terme.

12. Programme informatique comprenant un moyen de codage qui, lorsqu'il est exécuté dans un ordinateur, amène ledit ordinateur à exécuter ledit procédé conforme à l'une quelconque des revendications 1 à 11.

13. Produit de programme informatique, comprenant un support pouvant être lu par ordinateur et un programme informatique conforme à la revendication 12, dans lequel ledit programme informatique est inclus dans le support pouvant être lu par ordinateur et est constitué par un ou plusieurs supports issus du groupe : ROM, PROM, EPROM, mémoire Flash, EEPROM et unité de disque dur.

14. Dispositif (100) permettant de générer des coefficients de transformée de Fourier discrète appartenant à une séquence de Zadoff-Chu décalée cycliquement dans lequel ladite séquence de Zadoff-Chu décalée cycliquement est une séquence de Zadoff-Chu de base présentant une racine $u$ de longueur $N$ décalée cycliquement de $p > 1$ éléments de séquence, ledit dispositif étant agencé pour réaliser les étapes suivantes :

- la conjugaison complexe de ladite séquence de Zadoff-Chu de base,
- le décalage cyclique de ladite séquence de Zadoff-Chu de base complexe conjuguée,
- l'échantillonnage cyclique de ladite séquence de Zadoff-Chu de base complexe conjuguée décalée cycliquement, et
- la multiplication de ladite séquence de Zadoff-Chu de base complexe conjuguée décalée cycliquement échantillonnée cycliquement avec une constante C de façon à générer les coefficients de transformée de Fourier discrète de ladite séquence de Zadoff-Chu décalée cycliquement.

15. Station mobile (10) agencée pour une communication dans un système de communication sans fil comprenant au moins un dispositif (100) conforme à la revendication 14.

10

40    50

20    30

100

**Fig. 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- efficient computation of DFT of Zadoff-Chu sequences. *THE INSTITUTION OF ENGINEERING AND TECHNOLOGY JOURNAL,* 23 April 2009, vol. 45 (9

- **B. M. POPOVIC ; O. MAURITZ.** Efficient matched filters for paired root Zadoff-Chu sequences. *3GPP RANI#48bis meeting, source: Huawei, tdoc number R1-071409,* 26 March 2007